# EUROPEAN PATENT SPECIFICATION

(11) **EP 0 970 597 B1**
(45) Date of publication and mention of the grant of the patent: **21.04.2004**
(21) Application number: 99202133.7
(22) Date of filing: 01.07.1999
(51) Int. Cl.: A01D 43/10

(54) **Mower-conditioner**
Mäh- und Konditionierungsvorrichtung
Faucheuse-conditioneuse

(30) Priority: 06.07.1998 NL 1009562
(43) Date of publication of application: 12.01.2000
(73) Proprietor: MAASLAND N.V., 3147 PA Maassluis (NL)
(72) Inventor: van der Lely, Olaf, 6300 Zug (CH)
(74) Representative: Corten, Maurice Jean F.M.

(56) References cited:
- EP-A- 0 543 312
- EP-A- 0 772 967
- WO-A-90/12492
- WO-A-98/04112
- DE-A- 4 113 630
- DE-A- 4 344 585
- DE-A- 19 632 868

## Description

The present invention relates to a mowing machine comprising a mowing unit with a crushing member which, seen in the direction of travel, is located therebehind, which mowing machine also comprises adjusting means with the aid of which one or more crushing characteristics can be adjusted, and at least one sensor supplying one or more control signals to said adjusting means for the automatic adjustment of the aforementioned crushing characteristics.

Such a mowing machine is known from NL-A-1001586 which corresponds to EP-A-0 772 967.

In practice, it happens that the thickness and/or the length and/or the quantity and/or the type of the crop to be crushed in a mowing machine varies. For example, when long crop is mowed, the flow of crop towards the crushing member will increase, which may entail that the crop is wound around the crushing member and/or is insufficiently treated by the crushing elements, while there is a reasonable risk that the crushing member gets blocked. The extent to which the crushing member is loaded during operation increases in this situation. From the aforementioned document there is known a construction in which, in order to obviate this drawback, the mutual position of the crushing member and the mowing unit is adjustable on the basis of a control signal supplied by a sensor determining the load to which the crushing member is subjected during operation.

In the known machine the sensor is constituted by a force or moment meter disposed on the rotor of the crushing member or on the shaft of the motor. The disadvantage of such a sensor is that it is difficult to be disposed on the rotor and that there is required relatively much electronics for converting the signal from the sensor into a control signal for the adjusting means for the crusher.

The invention aims at providing a mowing machine of the above-described type, in which a control signal for the adjusting means is obtained in a relatively simple manner. In accordance with the invention this is achieved in that the mowing machine is characterized in that the sensor is a driving speed sensor supplying a control signal which is correlated to the driving speed of the mowing machine during operation. In other words, dependently of the speed at which the mowing machine is moved, the crushing characteristics of the crushing member and the mowing unit are automatically adjusted. The adjusting means for adjusting these crushing characteristics can be suitable for adjusting the mutual position of the crushing member and the mowing unit and/or for varying the number of revolutions of the crushing member and/or for adjusting the size of the crop feed-through channel, etc. In other words, the crushing characteristics can relate both to the relative position, in particular the distance between the crushing member and the mowing unit, and to the intensity of the crushing itself, in particular by means of the number of revolutions of the crushing member and the size of the crop feed-through channel.

With reference to two embodiments shown in the drawings, the invention will be set out in further detail in the following.

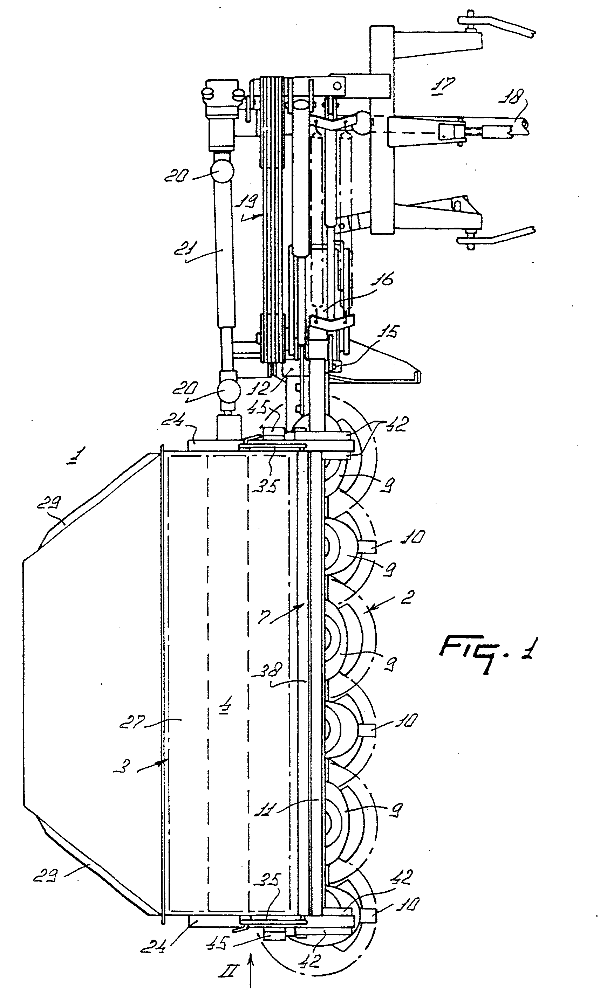

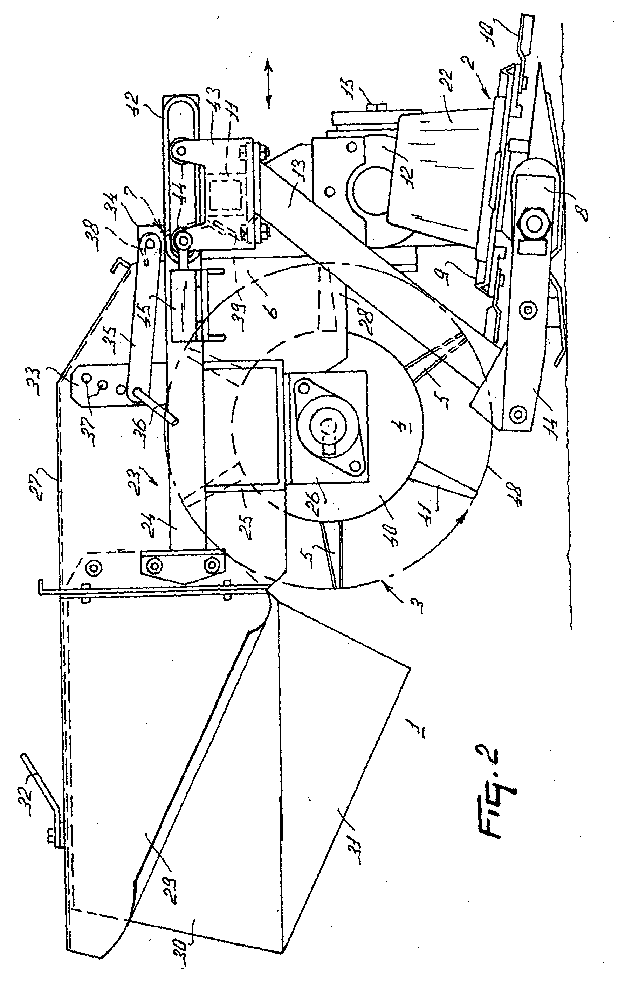

Figure 1 is a plan view of the mower-conditioner according to the invention;

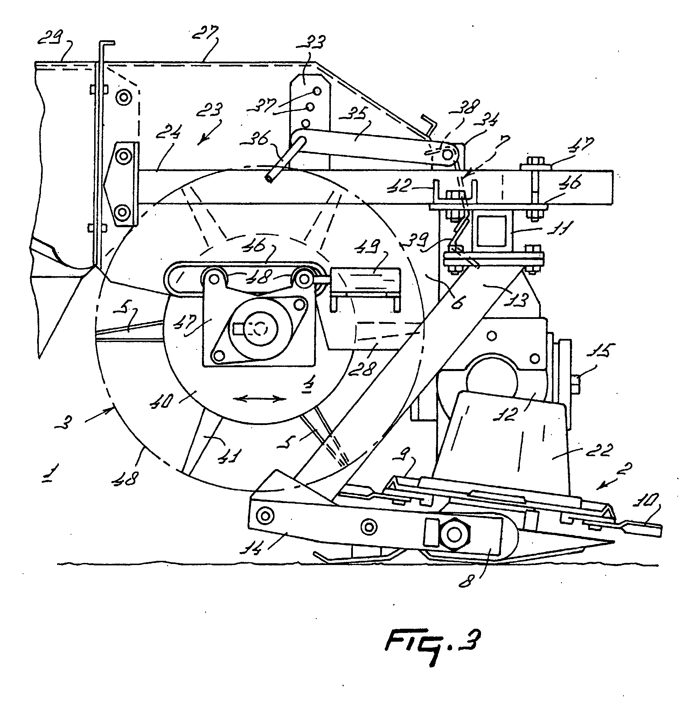

Figure 2 is a side view of the mowing machine depicted in Figure 1, the mowing unit being designed as a movable one, and
Figure 3 is a side view of a version of the mowing machine shown in Figure 1, the crushing member being designed as a movable one.

The mowing machine 1, shown in the figures, comprises a mowing unit 2 and a crushing member 3 including a rotor 4 and crushing elements 5, as well as an element 7 constituting together with said crushing member 3 a crop feed-through channel 6.

In the embodiment shown, the mowing unit 2 comprises a cutter bar 8 including six mowing discs 9 provided with mowing knives 10, pivotable thereabove about vertical shafts. Above the cutter bar 8 and parallel thereto, there is disposed a carrier beam 11. The connection between the cutter bar 8 and the carrier beam 11 is constituted at one end by a gear box 12 and at the other end by a supporting element 13, extending obliquely rearwards and downwards from the carrier beam 11, and a substantially horizontally extending connecting element 14, connected with said supporting element near the lower end thereof and also connected with the cutter bar 8.

The mowing machine is pivotably connected, in a customary manner, about an approximately horizontal pivot shaft 15 which, in its operative position, extends in the direction of travel, with a supporting arm 16 including a carrier frame 17, by means of which the mowing machine can be coupled to a three-point lifting hitch of a tractor or similar. The drive of the mowing machine takes place from a power take-off shaft 18 of a (non-shown) tractor, via different transmission members in a gear box 12 connected with the supporting arm 16, from which the mowing unit 2 is driven by means of a belt transmission 19 and the different transmission members in the gear box 12, and the crushing member 3 is driven by means of an intermediate shaft 21 provided with universal joints 20.

The outer mowing disc on the side where the elements 13 and 14 constitute the connection between the cutter bar 8 and the carrier beam 11 is provided with a hat-shaped crop guide member 22.

A frame 23, constituted by supporting beams 24, a bracket 25 fixed below each one thereof, and an angle plate 26 fixed below said bracket, is connected with the carrier beam 11. The crushing member 3 is pivotably disposed between the angle plates 26. To the frame 23 there are additionally fastened top plate elements 27 and side plate elements 28 and 29, while the rearmost side plate elements 29 extend inwardly in rearward direction and are outwardly bent at their lower sides. On the inside of the side plate elements 29, there are available further side plates 30 which have at their lower sides a portion 31 extending inwardly and which, by means of a handle 32, can be moved further inwardly in order to obtain a required swath definition.

Furthermore, a first support 33 and a second support 34 are fixed to the supporting beams 24. By means of a shaft 36 and apertures 37, a connecting strip 35, pivotable in the second support 34, can be fixed in the first support 33 in such a way that the position of this connecting element 35, and consequently that of the strip 38 fixed thereto, including the beater bar 39 fixed to said strip, extending in the longitudinal direction of the crushing member 3, determine the required size of the crop feed-through channel 6.

The rotor 4 of the crushing member 3 comprises a cylindrical carrier 40 on which the crushing elements 5 are disposed so as to be staggered relative to each other. The crushing elements 5 are tapering, have an I-shaped profile and project outwardly from the roller. The outer crushing elements 41 on both sides of the cylindrical carrier 40 are flat, tapering and also project outwardly from the roller. As a result, the outer crushing elements are dagger-shaped and preferably made of a flat strip of spring steel having a thickness of approximately 3 mm. Seen in plan view, the outer crushing elements 41 are located at a distance of approximately one cm from the side plate elements 28. Because, during operation, the dagger-shaped outer flat crushing elements 41 move relatively close along the side plate elements 28, material to be crushed that has settled on said side plate elements 28 or has gathered in the angles of the crop feed-through channel 6, is cut up. As the crop cut up is wound less easily and can be better discharged, it is avoided that the rotor 4 runs roughly and the crop feed-through channel 6 and possibly the rotor 4 are blocked up with crop. The application of a relatively thin strip of spring steel for the outer crushing elements 41 has the advantage that the crushing elements 41, seen in the direction of rotation of the rotor 4, are relatively stiff, while the crushing elements 41, in a direction perpendicular to the direction of rotation of the rotor 4, on the contrary, can easily deflect and spring back. The latter phenomenon may occur when, for example, undesired objects, such as a piece of wood or a stone, get into the rotor 4. It will be obvious that also more than two dagger-shaped crushing elements 41 can be disposed on the cylindrical carrier 40, and that the crushing elements 41 can be made of a different material having the characteristics identical to those of spring steel, such as synthetic material.

The frame 23, in which the crushing member 3 is pivotably suspended, can be moved relative to the cutter bar 8. For that purpose, the two supporting beams 24 comprise near their front side a guide means 42, and the mowing unit 2 can reciprocate in said guide means 42 by means of supports 43, provided at the ends of the carrier beam 11, and rollers 44 fastened thereto. This reciprocating movement can be achieved by means of adjusting means, in particular an operating cylinder 45, fastened to a supporting beam 24, on one or both sides of the machine. Upon displacing the mowing unit 2, the mutual positioning of the crushing member 3 relative to the beater bar 39 remains unchanged. Instead of displacing the mowing unit 2, also the rotor 4 can be displaced; this situation is shown in Figure 3. However, in this situation the mutual positioning of the crushing member 3 relative to the beater bar 39 does change and consequently the size of the crop feed-through channel 6 changes as well. In the embodiment of Figure 3 there is fitted a guide means 46 to each of the side plate elements 28 on the inside of the machine. In this embodiment the crushing member 3 is not directly bearing-supported in the side plate elements 28, but in supports 47 which, by means of rollers 48, can reciprocate in the guide means 46. This reciprocating movement can be achieved by means of adjusting means, in particular an operating cylinder 49, fastened to a side plate 28, on one or both sides of the machine.

The crushing characteristics of the machine can also be adjusted by the application of adjusting means suitable for adjusting the crushing intensity. It is possible, for example, to adjust the crushing intensity by means of a unit for varying the number of revolutions of the crushing member. Depending on the crop conditions, at a specific number of revolutions, it will be possible to obtain an optimal crushing of the crop.- An other possibility consists therein that the adjusting means are constituted by a unit for adjusting the size of the crop feed-through channel. Actually, in the above described embodiment, this can be achieved by the automatic adjustment of the strip 38 including the beater bar 39. The shown manual adjustment by means of the shaft 36 and the support 33 provided with apertures 37 can be replaced by an operating cylinder, for adjusting the position of the connecting element 35 and consequently that of the strip 38 including the beater bar 39. Of course, combinations of the here described adjusting means are possible as well.

## Claims

1. A mowing machine (1) comprising a mowing unit (2) with a crushing member (3) which, seen in the direction of travel, is located therebehind, which mowing machine also comprises adjusting means (45, 49) with the aid of which one or more crushing characteristics can be adjusted, and at least one sensor supplying one or more control signals to said adjusting means (45, 49) for the automatic adjustment of the aforementioned crushing characteristics, **characterized in that** the sensor is a driving speed sensor supplying a control signal which is correlated to the driving speed of the mowing machine during operation.

2. A mowing machine (1) as claimed in claim 1, **characterized in that** the adjusting means (45, 49) are suitable for adjusting the mutual position of the crushing member (3) and the mowing unit (2), and the driving speed sensor supplies one or more control signals to said adjusting means (45, 49) for the automatic adjustment of said position.

3. A mowing machine (1) as claimed in claim 2, **characterized in that** said mowing machine comprises a frame (23), and the adjusting means (45) are active between the frame (23) and the mowing unit (2).

4. A mowing machine (1) as claimed in claim 3, **characterized in that** on both sides of the machine the frame (23) is provided with a guide means (42) in which the mowing unit (2) is movable by means of rollers (44).

5. A mowing machine (1) as claimed in claim 4, **characterized in that** the mowing unit (2) is provided with a carrier beam (11), at the ends of which supports (43) are disposed for supporting the rollers (44).

6. A mowing machine (1) as claimed in claim 5, **characterized in that** the adjusting means (45), on the one hand, are disposed on the frame (23) and, on the other hand, engage a support (43).

7. A mowing machine (1) as claimed in claim 2, **characterized in that** said mowing machine is provided on both sides with side plate elements (28), and the crushing member (3) is movable in said side plate elements (28), and the adjusting means (49) are active between a side plate element (28) and the crushing member (3).

8. A mowing machine (1) as claimed in claim 7, **characterized in that** the side plate elements (28) are provided with a guide means (46) in which the crushing member (3) is movable by means of rollers (48).

9. A mowing machine (1) as claimed in claim 8, **characterized in that** the crushing member (3) is pivotably bearing-supported in supports (47) supporting the rollers (48).

10. A mowing machine (1) as claimed in claim 9, **characterized in that** the adjusting means (49), on the one hand, are disposed on a side plate element (28) and, on the other hand, engage a support (47).

11. A mowing machine (1) as claimed in any one of the preceding claims, **characterized,in that** the adjusting means are suitable for adjusting the crushing intensity of the crushing member (3), and the driving speed sensor supplies one or more control signals to said adjusting means for the automatic adjustment of said crushing intensity.

12. A mowing machine (1) as claimed in claim 11, **characterized in that** the adjusting means are constituted by a unit for varying the number of revolutions of the crushing member (3).

13. A mowing machine (1) as claimed in claim 11, **characterized in that** the adjusting means are constituted by a unit for adjusting the size of the crop feed-through channel (6).

## Patentansprüche

1. Mähmaschine (1), die ein Mähwerk (2) mit einem in bezug auf die Arbeitsrichtung hinter ihm angeordneten Quetschglied (3) umfaßt, wobei die Mähmaschine auch Stellvorrichtungen (45, 49) umfaßt, mit deren Hilfe ein oder mehrere Quetsch-Charakteristika eingestellt werden können, sowie mindestens einen Sensor, der zur automatischen Einstellung der obengenannten Quetsch-Charakteristika ein oder mehrere Steuersignale an die Stellvorrichtungen (45, 49) liefert,
**dadurch gekennzeichnet, daß** der Sensor ein Fahrgeschwindigkeitssensor ist, der ein Steuersignal liefert, das der Fahrgeschwindigkeit der Mähmaschine im Betrieb entspricht.

2. Mähmaschine (1) nach Anspruch 1,
**dadurch gekennzeichnet, daß** die Stellvorrichtungen (45, 49) geeignet sind, die Position des Quetschgliedes (3) und des Mähwerkes (2) relativ zueinander einzustellen, und daß der Fahrgeschwindigkeitssensor ein oder mehrere Steuersignale zur automatischen Einstellung dieser Position an die Stellvorrichtungen (45, 49) gibt.

3. Mähmaschine (1) nach Anspruch 2,
**dadurch gekennzeichnet, daß** die Mähmaschine einen Rahmen (23) aufweist, und daß die Stellvorrichtung (45) zwischen dem Rahmen (23) und dem Mähwerk (2) wirksam ist.

4. Mähmaschine (1) nach Anspruch 3,
**dadurch gekennzeichnet, daß** der Rahmen (23) auf beiden Seiten der Maschine eine Führung (42) aufweist, in der das Mähwerk (2) mittels Rollen (44) bewegbar ist.

5. Mähmaschine (1) nach Anspruch 4,
**dadurch gekennzeichnet, daß** das Mähwerk (2) einen Träger (11) aufweist, an dessen Enden die Rollen (44) abstützende Stützen (43) angeordnet sind.

6. Mähmaschine (1) nach Anspruch 5,
**dadurch gekennzeichnet, daß** die Stellvorrichtung (45) auf der einen Seite am Rahmen (23) angebracht ist und auf der anderen Seite mit einer Stütze (43) in Eingriff steht.

7. Mähmaschine (1) nach Anspruch 2,
**dadurch gekennzeichnet, daß** die Mähmaschine auf beiden Seiten Seitenplattenelemente (28) aufweist, daß das Quetschglied (3) in den Seitenplattenelementen (28) bewegbar ist, und daß die Stellvorrichtung (49) zwischen einem Seitenplattenelement (28) und dem Quetschglied (3) wirksam ist.

8. Mähmaschine (1) nach Anspruch 7,
**dadurch gekennzeichnet, daß** die Seitenplattenelemente (28) eine Führung (46) aufweisen, in der das Quetschglied (3) mittels Rollen (48) bewegbar ist.

9. Mähmaschine (1) nach Anspruch 8,
**dadurch gekennzeichnet, daß** das Quetschglied (3) in die Rollen (48) abstützenden Stützen (47) drehbar gelagert und gehalten ist.

10. Mähmaschine (1) nach Anspruch 9,
**dadurch gekennzeichnet, daß** die Stellvorrichtung (49) auf der einen Seite an einem Seitenplattenelement (28) angebracht ist und auf der anderen Seite mit einer Stütze (47) in Eingriff steht.

11. Mähmaschine (1) nach einem der vorhergehenden Ansprüche,
**dadurch gekennzeichnet, daß** die Stellvorrichtungen geeignet sind, die Quetschintensität des Quetschgliedes (3) einzustellen, und daß der Fahrgeschwindigkeitssensor zur automatischen Einstellung der Quetschintensität ein oder mehrere Steuersignale an die Stellvorrichtungen gibt.

12. Mähmaschine (1) nach Anspruch 11,
**dadurch gekennzeichnet, daß** die Stellvorrichtungen durch eine Einheit zur Änderung der Drehzahl des Quetschgliedes (3) gebildet sind.

13. Mähmaschine (1) nach Anspruch 11,
**dadurch gekennzeichnet, daß** die Stellvorrichtungen durch eine Einheit zur Einstellung der Größe des Gutdurchflußkanals (6) gebildet sind.

## Revendications

1. Moissonneuse (1) comprenant une unité de moissonnage (2) avec un élément de broyage (3) qui, vu dans le sens de déplacement, est situé derrière celle-ci, laquelle moissonneuse comprend également des moyens d'ajustement (45, 49) au moyen desquels une ou plusieurs caractéristiques de broyage peu(ven)t être ajustée(s), et au moins un capteur délivrant un ou plusieurs signaux de commande auxdits moyens d'ajustement (45, 49) pour l'ajustement automatique des caractéristiques de broyage mentionnées ci-dessus, **caractérisée en ce que** le capteur est un capteur de vitesse d'entraînement délivrant un signal de commande qui est lié à la vitesse d'entraînement de la moissonneuse au cours de l'utilisation.

2. Moissonneuse (1) selon la revendication 1, **caractérisée en ce que** les moyens d'ajustement (45, 49) sont appropriés pour ajuster la position mutuelle de l'élément de broyage (3) et de l'unité de moissonnage (2), et **en ce que** le capteur de vitesse d'entraînement délivre un ou plusieurs signaux de commande auxdits moyens d'ajustement (45, 49) pour l'ajustement automatique de ladite position.

3. Moissonneuse (1) selon la revendication 2, **caractérisée en ce que** ladite moissonneuse comprend un châssis (23), les moyens d'ajustement (45) étant actifs entre le châssis (23) et l'unité de moissonnage (2).

4. Moissonneuse (1) selon la revendication 3, **caractérisée en ce que** sur les deux côtés de la machine, le châssis (23) est muni d'un moyen de guidage (42) dans lequel l'unité de moissonnage (2) est mobile au moyen de rouleaux (44).

5. Moissonneuse (1) selon la revendication 4, **caractérisée en ce que** l'unité de moissonnage (2) est munie d'une poutre porteuse (11) aux extrémités de laquelle des supports (43) sont disposés pour supporter les rouleaux (44).

6. Moissonneuse (1) selon la revendication 5, **caractérisée en ce que** les moyens d'ajustement (45), d'une part, sont disposés sur le chassis (23) et, d'autre part, mettent en prise un support (43).

7. Moissonneuse (1) selon la revendication 2, **caractérisé en ce que** ladite moissonneuse est munie sur les deux côtés d'éléments de plaque latéraux (28), et l'élément de broyage (3) est mobile dans lesdits éléments de plaque latéraux (28), les moyens d'ajustement (49) étant actifs entre un élément de plaque latérale (28) et l'élément de broyage (3).

8. Moissonneuse (1) selon la revendication 7, **caractérisée en ce que** les éléments de plaque latéraux (28) sont munis d'un moyen de guidage (46) dans lequel l'élément de broyage (3) est mobile au moyen de rouleaux (48).

9. Moissonneuse (1) selon la revendication 8, **caractérisée en ce que** l'élément de broyage (3) est porté avec faculté de pivotement dans des supports (47) supportant les rouleaux (48).

10. Moissonneuse (1) selon la revendication 9, **caractérisé en ce que** les moyens d'ajustement (49), d'une part, sont disposés sur un élément de plaque latéral (28) et, d'autre part, mettent en prise un support (47).

11. Moissonneuse (1) selon l'une quelconque des revendications précédentes, **caractérisé en ce que** les moyens d'ajustement sont appropriés pour ajuster l'intensité de broyage de l'élément de broyage (3), le capteur de vitesse d'entraînement délivrant un ou plusieurs signaux de commande auxdits moyens d'ajustement pour l'ajustement automatique de ladite intensité de broyage.

12. Moissonneuse (1) selon la revendication 11, **caractérisée en ce que** les moyens d'ajustement sont constitués par une unité destinée à faire varier le nombre de rotations de l'élément de broyage (3).

13. Moissonneuse (1) selon la revendication 11, **caractérisé en ce que** les moyens d'ajustement sont constitués par une unité destinée à ajuster la taille du canal de traversée de récolte (6).
